# EUROPÄISCHE PATENTSCHRIFT

(11) **EP 0 867 063 B1**
(45) Veröffentlichungstag und Bekanntmachung des Hinweises auf die Patenterteilung: **13.09.2000**
(21) Anmeldenummer: 96945904.9
(22) Anmeldetag: 29.11.1996
(51) Int. Cl.: H02J 7/00

(54) **BATTERIEANKOPPELVORRICHTUNG**
BATTERY COUPLER
DISPOSITIF DE RACCORDEMENT DE BATTERIE

(30) Priorität: 12.12.1995 DE 19546421
(43) Veröffentlichungstag der Anmeldung: 30.09.1998
(73) Patentinhaber: SIEMENS AKTIENGESELLSCHAFT, 80333 München (DE)
(72) Erfinder: BOLDIN, Detlef, D-91090 Effeltrich (DE); FISCHER, Karl, D-91334 Hemhofen (DE)
(86) Internationale Anmeldenummer: DE9602294
(87) Internationale Veröffentlichungsnummer: WO9722171

(56) Entgegenhaltungen:
- EP-A- 0 089 544
- DE-A- 3 104 965
- DE-A- 3 141 139
- US-A- 5 440 179
- PATENT ABSTRACTS OF JAPAN vol. 018, no. 641 (E-1639), 6.Dezember 1994 & JP 06 245540 A (MATSUSHITA ELECTRIC WORKS LTD), 2.September 1994

## Beschreibung

Die Erfindung bezieht sich auf eine Vorrichtung zur Ankopplung einer Batterie an einen netzgespeisten Spannungszwischenkreis eines Umrichters.

Aus der DE 39 35 243 A1 ist eine Wechselrichterschaltung mit einem gesteuerten Gleichrichter, mit einem Spannungszwischenkreis, mit einem Wechselrichter und mit einer Batterie bekannt. Am Eingang des gesteuerten Gleichrichters ist eine Wechselstromquelle angeschlossen. Die Eingangswechselspannung wird in eine Gleichspannung gewandelt, wobei deren Wert auf einen Sollwert über eine Phasensteuerung der Thyristoren des gesteuerten Gleichrichters eingestellt wird. Der Wechselrichter wandelt diese generierte Gleichspannung in eine vorbestimmte Wechselspannung um, die einer Last zugeführt wird. Die Gleichspannung enthält Brummspannungskomponenten, die durch die Gleichrichtung der Wechselrichterspannung entstehen. Diese Brummenspannungskomponenten werden über eine Drossel und einen Kondensator des Spannungszwischenkreises gedämpft, so daß eine Gleichspannung mit geringerer Brummkomponente zum Wechselrichter gelangt. Parallel zum Gleichspannungsausgang des gesteuerten Gleichrichters ist die Batterie geschaltet. In diesem Zustand wird die Batterie "schwimmend" geladen. Wenn jedoch der Ladestrom für die Batterie Brummkomponenten enthält, so erzeugen diese in der Batterie Wärme, wodurch die Batterie zusätzlich belastet wird. Die Drossel des Spannungszwischenkreises dämpft diese Brummkomponenten auf einen definierten Betrag. Eine derartige Wechselrichterschaltung kann als ausfallsichere Stromversorgungseinheit, auch als unterbrechungsfreie Stromversorgung (USV) bezeichnet, verwendet werden.

Für die Auslegung der Drossel existiert nun ein Widerspruch. Der Wechselrichter benötigt eine Drossel mit kleiner Induktivität, wogegen beim Laden der Batterie eine Drossel mit hoher Induktivität zur Unterdrückung der Stromkomponenten benötigt wird. Diese Diskrepanz wird in dieser genannten Offenlegungsschrift dadurch gelöst, daß eine sättigbare Drossel oder eine Drossel mit einer Einrichtung zum Unterdrücken des magnetischen Flusses beim Laden in einer Zuleitung der Batterie angeordnet ist.

Mit dieser Batterieankoppelvorrichtung ist die Batterie immer mit dem Spannungszwischenkreis der Wechselrichterschaltung verbunden (Dauerbelastung der Batterie mit Wechselstrom). Außerdem besteht nicht die Möglichkeit, zur Zyklisierung eine kontrollierte Auf- und Entladung it einem einstellbaren Strom vornehmen zu können (Batteriepflege).

Aus der DE 31 04 965 A1 sind mehrere Varianten eines Gleichstrompulswandlers bekannt, mit denen eine Batterie aus einem Wechselspannungsnetz geladen werden kann, wobei der Scheitelwert der Netzwechselspannung kleiner oder größer als die Spannung der zu ladenden Batterie sein kann. Die einzelnen Gleichstrompulswandler-Varianten unterscheiden sich durch unterschiedliche Kombinationen bzw. Reihenschaltungen von bekannten Hochsetzstellern und Tiefsetzstellern. In jedem der Gleichstrompulswandler werden Leistungstransistoren mit hoher Schaltfrequenz eingesetzt. Gegebenenfalls sind hierzu ersatzweise auch Frequenzthyristoren verwendbar. Die Thyristoren der Gleichstrompulswandler werden lediglich mit doppelter Netzfrequenz geschaltet. Durch die Kombination bzw. Reihenschaltung von bekannten Hochsetz- und Tiefsetzstellern sind die Gleichstrompulswandler einfach aufgebaut, haben ein geringes Gewicht und können wirtschaftlich hergestellt werden. Nachteilig ist jedoch, daß der Energiefluß nur in einer Richtung möglich ist, und zwar vom Wechselspannungnetz zur Batterie.

Aus dem Aufsatz "Modelling the Three Phase Propulsion System of a Modern Multisystem-Locomotive" von W. Geißler und F. Unger-Weber, abgedruckt im Konferenzband EPE' 91, Firenze, 4th Meet, Seiten 4-632 bis 4-637, ist eine Hochsetz-Tiefsetzstellerkombination bekannt. Diese Stellerkombination besteht aus zwei Stromrichterbrückenzweigen, die jeweils elektrisch parallel zu einem Kondensator geschaltet sind und deren negative Anschlüsse miteinander verbunden sind. Außerdem ist eine Drossel vorgesehen, die die Mittenanschlüsse der beiden Stromrichterbrückenzweige miteinander verbinden. Als Stromrichterventile der beiden Stromrichterbrückenzweige sind abschaltbare Thyristoren vorgesehen, denen jeweils eine Freilaufdiode zugeordnet ist. Wenn die Freileitungsspannung (Eingangsspannung) größer ist als die Zwischenkreisspannung, so arbeitet dieser Steller als Tiefsetzsteller, wobei der Drosselstrom durch Takten eines Stromrichterventils geregelt werden kann. Ist die Zwischenkreisspannung größer als die Freileitungsspannung, so arbeitet dieser Steller als Hochsetzsteller, wobei ebenfalls der Drosselstrom durch Takten eines Stromrichterventils geregelt werden kann. Der Vorteil dieser Stellerschaltung besteht darin, daß kontinuierlich von der Tiefsetz- zur Hochsetzfunktion gewechselt werden kann. Der Nachteil besteht darin, daß die abschaltbaren Thyristoren und die zugehörigen Freilaufdioden den vollen Laststrom führen müssen, wodurch jeweils eine hohe Verlustleistung in den verwendeten Halbleiterbauelementen entsteht.

Der Erfindung liegt nun die Aufgabe zugrunde, eine Batterieankoppelvorrichtung anzugeben, mit der die Batterie nicht dauernd mit Wechselstrom belastet wird und sie gepflegt werden kann, wodurch sich die Batterielebensdauer erhöht.

Diese Aufgabe wird erfindungsgemäß mit den Merkmalen des Anspruchs 1 gelöst.

Dadurch, daß die Batterieankoppelvorrichtung aus einem DC/DC-Wandler, einem Leistungshalbleiterschalter und einer Steuerelektronik besteht, werden folgende Vorteile erreicht:
- Da in Abhängigkeit eines Netzausfallsignals erst der Leistungshalbleiterschalter eingeschaltet wird, ist die Batterie im Gegensatz zur bisherigen eingangs beschriebenen Lösung vom Spannungszwischenkreis des Umrichters beim Vorhandensein des Netzes entkoppelt. Dadurch wird die Batterie nicht ständig mit Wechselstrom belastet (Dauerbelastung). Das heißt, die vollgeladene Batterie ist vom Spannungszwischenkreis des Umrichters abgeschaltet.
- Mittels des DC/DC-Wandlers kann Energie zwischen Batterie und Spannungszwischenkreis des Umrichters in beiden Richtungen, je nach Betriebszustand "Batterieentladetest" oder "Batterieladung" ausgetauscht werden.
- Mittels des DC/DC-Wandlers kann eine kontrollierte Entladung der Batterie mit kleinem Entladestrom und einer anschließende Aufladung (Zyklisierung) vorgenommen werden, wodurch reversible Alterungen der Batterie aufgehoben und somit die Batterielebensdauer erhöht werden kann (Batteriepflege).
- Mittels des DC/DC-Wandlers ist das Laden der Batterie und das Entladen für den Batterietest bei jeder Netzspannung möglich.
- Mittels des DC/DC-Wandlers kann der gezündete Leistungshalbleiterschalter wieder gesperrt werden, wodurch eine zusätzliche Kommutierungseinrichtung eingespart wird.
- Da der DC/DC-Wandler nur für einen geringen Teil der vollen Entladeleistung ausgelegt ist, weist die Batterieankoppelvorrichtung eine minimale Verlustleistung auf.

Vorteilhafte Ausgestaltungen der Batterieankoppelvorrichtung sind den Unteransprüchen 2 bis 9 zu entnehmen.

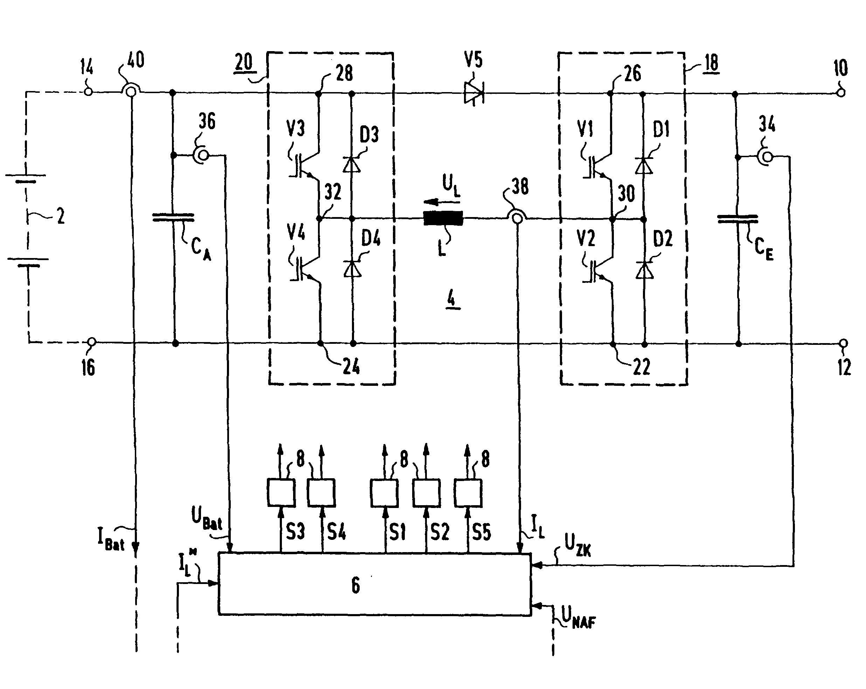

Zur weiteren Erläuterung der Erfindung wird auf die Zeichnung Bezug genommen, in der ein bevorzugtes Ausführungsbeispiel einer erfindungsgemäßen Batteriankoppelvorrichtung schematisch veranschaulicht ist.

Die erfindungsgemäße Vorrichtung zur Ankopplung einer Batterie 2 an einen netzgespeisten Spannungszwischenkreis eines Umrichters, der aus Übersichtlichkeitsgründen nicht dargestellt ist, weist einen Leistungshalbleiterschalter V5, einen DC/DC-Wandler 4 und eine Steuerelektronik 6 mit nachgeschalteten Treiberstufen 8 auf. Der DC/DC-Wandler 4 hat zwei Kondensatoren C_{E} und C_{A}, die jeweils elektrisch parallel zu den Eingangsanschlüssen 10 und 12 bzw. zu den Ausgangsanschlüssen 14 und 16, an denen die Batterie 2 angeschlossen werden kann, geschaltet sind. Außerdem sind zwei Stromrichterbrückenzweige 18 und 20 vorhanden, die jeweils elektrisch parallel zu einem Kondensator C_{E} bzw. C_{A} geschaltet sind.

Die Kondensatoren C_{E} und C_{A} auf der Zwischenkreis- und der Batterieseite der Batterieankoppelvorrichtung müssen den Wechselstrom führen, der von der Ankoppelvorrichtung erzeugt wird. Der eingangsseitige Kondensator C_{E} erhält seine größte Wechselstrombelastung im Entladebetrieb bei maximaler Zwischenkreisspannung des Umrichters und minimaler Batteriespannung U_{Bat} (Entladeschlußspannung). Der Ausgangskondensator C_{A} führt den größten Wechselstrom im Ladebetrieb bei Netzunterspannung. Wegen der möglichen hohen Batterie- und Zwischenkreisspannung des Umrichters kann der eingangsseitige Kondensator C_{E} und der Ausgangskondensator C_{A} aus zwei in Reihe geschalteten Kondensatoren bestehen, wobei die Spannungsaufteilung mittels Widerständen symmetriert wird.

Der Stromrichterbrückenzweig 18 bzw. 20 besteht aus einer Reihenschaltung zweier Stromrichterventile V1 und V2 bzw. V3 und V4, denen jeweils eine Freilaufdiode D1 und D2 bzw. D3 und D4 parallel geschaltet ist. Die negativen Anschlüsse 22 und 24 dieser beiden Stromrichterbrückenzweige 18 und 20 sind miteinander elektrisch leitend verbunden. Dadurch ist der negative Eingangsanschluß 12 mit dem negativen Ausgangsanschluß 16 durchverbunden. Die positiven Anschlüsse 26 und 28 dieser beiden Stromrichterbrückenzweige 18 und 20 sind mittels des Leistungshalbleiterschalters V5 derart miteinander verbindbar, daß ein Strom vom positiven Ausgangsanschluß 14 zum positiven Eingangsanschluß 10 fließen kann. Die Mittenanschlüsse 30 und 32 der beiden Stromrichterbrückenzweige 18 und 20 sind mittels einer Drossel L miteinander verbunden.

Die Induktivität der Drossel L wird so gewählt, daß bei maximaler Spannungszeitfläche an der Drossel L eine Stromwelligkeit von beispielsweise 0,2 · I_{L} auftritt. Die größte Spannungszeitfläche an der Drossel L tritt im Ladebetrieb auf, wenn bei kleinster Zwischenkreisspannung mit 2,4 V pro Batteriezelle geladen werden muß.

Ferner sind noch meist Meßwerterfassungseinrichtungen 34, 36, 38 und 40 vorhanden, mit denen die Istwerte der Zwischenkreisspannung U_{ZK}, der Batteriespannung U_{Bat}, des Drosselstromes I_{L} und des Batteriestromes I_{Bat} ermittelt werden. Die Istwerte Zwischenkreisspannung U_{BK}, Batteriespannung U_{Bat} und Drosselstrom I_{L} werden der Steuerelektronik 6 zugeführt. Außerdem wird dieser Steuerelektronik 6 ein Netzausfallsignal U_{NAF} und ein Drosselstrom-Sollwert I^{*}_{L} zugeführt. In Abhängigkeit dieser Signale U_{ZK}, U_{Bat}. I_{L}, I^{*}_{L} und U_{NAF} berechnet die Steuerelektronik 6 Steuersignale S1 bis S5 für die Stromrichterventile V1 bis V4 und den Leistungshalbleiterschalter V5, die mittels der nachgeschalteten Treiberstufen 8 in Ansteuersignale gewandelt werden.

Als Stromrichterventile V1 bis V4 der beiden Stromrichterbrückenzweige 18 und 20 und als Leistungshalbleiterschalter V5 werden jeweils feldgesteuerte, abschaltbare Halbleiterbauelemente vorgesehen. In dieser Darstellung sind als Stromrichterventile V1 bis V4 Insulated **G**ate Bipolar **T**ransistors (IGBT) vorgesehen. Es können auch **MOS C**ontrolled **T**hyristors (MCT) oder **M**OS **F**eld-**E**ffekt-**T**ransistoren (MOSFET) verwendet werden. Als Leistungshalbleiterschalter V5 ist in dieser Darstellung ein Thyristor vorgesehen. Es kann auch ein **M**OS Controlled Thyristor (MCT) oder ein **MOS F**eld-**E**ffekt-**T**ransistor (MOSFET), dem eine Diode in Reihe geschaltet ist, oder ein abschaltbarer Thyristor (GTO) vorgesehen sein.

Im Aufsatz "IGBT-Module in Stromrichtern: regeln, steuern, schützen", abgedruckt in der DE-Zeitschrift "etz", Band 110 (1989), Heft 10, Seiten 464 bis 471, ist ein Steuerteil für einen IGBT, bestehend aus einer Steuerelektronik mit Mikroprozessor, einer Potentialtrennung und einer Treiberstufe, dargestellt und im einzelnen beschrieben. Dadurch kann an dieser Stelle auf die Darstellung bzw. Beschreibung einer Ausführungsform einer Treiberstufe 8 verzichtet werden.

Im folgenden soll die Funktionsweise dieser Batterieankoppelvorrichtung näher erläutert werden:

Sobald eine nicht näher dargestellte Netzüberwachung einen Netz- bzw. Phasenausfall erkennt, wird der Steuerelektronik 6 ein Netzausfallsignal U_{NAF} übermittelt. Aufgrund dieses Signals U_{NAF} wird der Leistungshalbleiterschalter V5 gezündet, so daß die Batterie 2 umgehend die Spannung im Spannungszwischenkreis des Umrichters stützt. Um Tiefentladungsschutz zu gewährleisten, wird der Wechselrichter des Umrichters bei der Entladeschlußspannung der Batterie gesperrt. Nach einer einstellbaren Zeit wird dann auch der Leistungshalbleiterschalter V5 gelöscht, um die Batterie 2 vom Spannungszwischenkreis zu entkoppeln. Bei Wiederkehr des Netzes werden das Netzausfallsignal U_{NAF} und das Steuersignal S5 unterdrückt, so daß die Steuerelektronik 6 Steuersignale S2 und S3 für die Stromrichterventile V2 und V3 der beiden Stromrichterbrückenzweige 18 und 20 generieren kann. Diese beiden Stromrichterventile V2 und V3 bleiben so lange eingeschaltet, bis der Drosselstrom I_{L} größer als der Entladestrom ist. Durch Abschalten des Stromrichterventils V2 kann dann die Drossel L den Leistungshalbleiterschalter V5 über das Stromrichterventil V3 und die Freilaufdiode D1 löschen.

Für die Regelung der Stromrichterventile V1 bis V4 beim Laden der Batterie 2 werden die Istwerte Batteriespannung U_{Bat}, Zwischenkreisspannung U_{ZK} und Drosselstrom I_{L} benötigt. In Abhängigkeit des Batteriestrom-Istwertes I_{Bat} wird von einem nicht näher dargestellten Batteriemanagement ein Drosselstrom-Sollwert I^{*}_{L} der Steuerelektronik 6 zugeführt. Mittels dieses Sollwertes I^{*}_{L} wird der Drosselstrom I_{L} so geregelt, daß indirekt der Batteriestrom I_{Bat} auf einem konstanten Wert gehalten wird. In Abhängigkeit der Istwerte Zwischenkreisspannung UzK und Batteriespannung U_{Bat} werden die Ventile V1 bis V4 ein-bzw. ausgeschaltet bzw. getaktet. Dies gilt auch für das kontrollierte Entladen mit kleinem Entladestrom.

Mittels dieser Entladung bis zur Entladeschlußspannung mit kleinem Entladestrom wird ein Batterietest ohne Alterung der Batterie 2 durch eine Hochstromentladung ermöglicht. Bei entsprechender Kombination von kontrolliertem Laden und Entladen können sogar reversible Alterungen der Batterie aufgehoben und somit die Batterielebensdauer erhöht werden (Batteriepflege).

Mittels dieser erfindungsgemäßen Batterieankoppelvorrichtung kann eine Batterie 2 an einem beliebigen Spannungszwischenkreis eines Umrichters angeschlossen werden, wodurch eine Dauerbelastung der Batterie 2 mit Wechselstrom entfällt und wobei Maßnahmen zur Pflege der Batterie 2 zur Verfügung stehen.

## Patentansprüche

1. Vorrichtung zur Ankopplung einer Batterie (2) an einen netzgespeisten Spannungszwischenkreis eines Stromrichters mit zwei Kondensatoren (C_{E},C_{A}), die jeweils elektrisch parallel zu den Eingangs- bzw. Ausgangsanschlüssen (10,12 bzw. 14,16) geschaltet sind, mit zwei Stromrichterbrückenzweigen (18,20), die jeweils elektrisch parallel zu einem Kondensator (C_{E} bzw. CA) geschaltet und deren negative Anschlüsse (22,24) miteinander verbunden sind, mit einer Drossel (L), die die Mittenanschlüsse (30,32) der beiden Stromrichterbrückenzweige (18, 20) miteinander verbinden, mit einem Leistungshalbleiterschalter (V5), der die positiven Anschlüsse (26,28) der beiden Stromrichterbrückenzweige (18,20) derart verbindbar macht, daß ein Strom vom positiven Ausgangsanschluß (14) zum positiven Eingangsanschluß (10) fließt und mit einer Steuerelektronik (6) mit nachgeschalteten Treiberstufen (8), die aus ermittelten Istwerten (U_{Bat}-U_{ZK}, I_{L}, I_{Bat}) dieser Vorrichtung, einem Netzausfallsignal (U_{NAF}) und einem Drosselstrom-Sollwert (I^{*}_{L}) Steuersignale (S1,...,S5) für die Stromrichterventile (V1,...,V4) der beiden Stromrichterbrückenzweige (18,20) und den Leistungshalbleiterschalter (V5) berechnet.

2. Vorrichtung nach Anspruch 1, wobei als Stromrichterventile (V1,...,V4) der beiden Stromrichterbrückenzweige (18,20) und als Leistungshalbleiterschalter (V5) jeweils ein feldgesteuertes, abschaltbares Halbleiterbauelement vorgesehen sind.

3. Vorrichtung nach Anspruch 1, wobei jedes Stromrichterventil (V1,...,V4) der beiden Stromrichterbrückenzweige (18, 20) mit einer Freilaufdiode (D1,...,D4) versehen ist.

4. Vorrichtung nach Anspruch 1, wobei als Steuerelektronik (6) ein Signalprozessor vorgesehen ist.

5. Vorrichtung nach Anspruch 1, wobei als Kondensator (C_{E}, C_{A}) eine Reihenschaltung aus wenigstens zwei Kondensatoren vorgesehen ist.

6. Vorrichtung nach Anspruch 1, wobei als Leistungshalbleiterschalter (V5) ein Thyristor vorgesehen ist.

7. Vorrichtung nach Anspruch 2, wobei als feldgesteuertes, abschaltbares Halbleiterbauelement ein Insulated Gate Bipolar Transistor vorgesehen ist.

8. Vorrichtung nach Anspruch 2, wobei als feldgesteuertes, abschaltbares Halbleiterbauelement ein MOS Controlled Thyristor vorgesehen ist.

9. Vorrichtung nach Anspruch 2, wobei als feldgesteuertes, abschaltbares Halbleiterbauelement ein MOS-Feld-Effekt-Transistor vorgesehen ist, wobei dieser als Leistungshalbleiterschalter (V5) mit einer in Reihe geschalteten Diode versehen ist.

10. Vorrichtung nach Anspruch 1, wobei als Leistungshalbleiterschalter (V5) ein abschaltbarer Thyristor vorgesehen ist.

## Claims

1. Apparatus for coupling a battery (2) to a mains-powered voltage intermediate circuit of a converter having two capacitors (C_{E}, C_{A}) which are each connected electrically in parallel with the input and, respectively, output connections (10, 12) and, respectively, (14, 16), having two converter bridge arms (18, 20) which are each connected electrically in parallel with one capacitor (C_{E} or, respectively, C_{A}) and whose negative connections (22, 24) are connected to one another, having an inductor (L) which connects the centre connections (30, 32) of the two converter bridge arms (18, 20) to one another, having a semiconductor power switch (V5) which makes it possible to connect the positive connections (26, 28) of the two converter bridge arms (18, 20) in such a manner that a current flows from the positive output connection (14) to the positive input connection (10), and having control electronics (6) with downstream driver stages (8), which control electronics (6) use determined actual values (U_{Bat}, U_{ZK}, I_{L}, I_{Bat}) of this apparatus, a mains failure signal (U_{NAF}) and a reference inductor current value (I) to calculate control signals (S1, ..., S5) for the active converter devices (V1, ..., V4) in the two converter bridge arms (18, 20) and the semiconductor power switch (VS).

2. Apparatus according to Claim 1, a field-controlled semiconductor component which can be turned off being provided in each case as the active converter devices (V1, ..., V4) in the two converter bridge arms (18, 20) and as the semiconductor power switch (V5).

3. Apparatus according to Claim 1, each active converter device (V1, ..., V4) in the two converter bridge arms (18, 20) being provided with a freewheeling diode (D1, ..., D4).

4. Apparatus according to Claim 1, a signal processor being provided as the control electronics (6).

5. Apparatus according to Claim 1, a series circuit composed of at least two capacitors being provided as the capacitor (C_{E}, C_{A}).

6. Apparatus according to Claim 1, a thyristor being provided as the semiconductor power switch (V5).

7. Apparatus according to Claim 2, an insulated gate bipolar transistor being provided as the field-controlled semiconductor component which can be turned off.

8. Apparatus according to Claim 2, an MOS controlled thyristor being provided as the field-controlled semiconductor component which can be turned off.

9. Apparatus according to Claim 2, an MOS field-effect transistor being provided as the field-controlled semiconductor component which can be turned off, this transistor being provided with a series-connected diode as the semiconductor power switch (V5).

10. Apparatus according to Claim 1, a thyristor which can be turned off being provided as the semiconductor power switch (V5).

## Revendications

1. Dispositif de raccordement d'une batterie (2) à un circuit intermédiaire de tension, alimenté par le secteur, d'un convertisseur, comportant deux condensateurs (C_{E}, C_{A}), qui sont branchés chacun en parallèle du point de vue électrique avec les bornes (10, 12) d'entrée et les bornes (14, 16) de sortie, comportant deux branches (18, 20) de ponts de convertisseur qui sont branchées chacune en parallèle du point de vue électrique avec un condensateur (CE et C_{A}) et dont les bornes (22, 24) négatives sont reliées l'une à l'autre, comportant une bobine (L) de choc qui relie l'une à l'autre les bornes (30, 32) médianes des deux branches (18, 20) de ponts de convertisseur, comportant un dispositif (V5) à semi-conducteur de puissance pour la commutation de puissance, qui permet de relier les bornes (26, 28) positives des deux branches (18, 20) de ponts de convertisseur de telle manière qu'un courant passe de la borne (14) de sortie positive à la borne (10) d'entrée positive, et comportant une électronique (6) de commande qui a des étages (8) de circuit d'attaque en aval et qui, à partir de valeurs (U_{Bat}, U_{ZK}, I_{L}, I_{Bat}) réelles déterminées de ce dispositif, d'un signal (U_{NAF}) de panne du secteur et d'une valeur (I^{∗}_{L}) de consigne du courant de la bobine de choc, calcule des signaux (S1, ..., S5) de commande pour les soupapes (V1, ..., V4) de convertisseur des deux branches (18, 20) de ponts de redresseur et pour le dispositif (V5) à semi-conducteur de puissance pour la commutation de puissance.

2. Dispositif suivant la revendication 1, un composant à semi-conducteur commandé par champ et pouvant être déconnecté étant prévu chaque fois comme soupapes (V1, ..., V4) de convertisseur des deux branches (18, 20) de ponts de convertisseur et comme dispositif (V5) à semi-conducteur de puissance pour la commutation de puissance.

3. Dispositif suivant la revendication 1, chaque vanne (V1, ..., V4) de convertisseur des deux branches (18, 20) de ponts de convertisseur étant munie d'une diode (D1, ..., D4) de roue libre.

4. Dispositif suivant la revendication 1, un processeur de signaux étant prévu comme électronique (6) de commande.

5. Dispositif suivant la revendication 1, un circuit série d'au moins deux condensateurs étant prévu comme condensateurs (C_{E}, C_{A}).

6. Dispositif suivant la revendication 1, un thyristor étant prévu comme dispositif (V5) à semi-conducteur de puissance pour la commutation de puissance.

7. Dispositif suivant la revendication 2, un Insulated Gate Bipolar Transistor étant prévu comme composant à semi-conducteur commandé par champ et pouvant être déconnecté.

8. Dispositif suivant la revendication 2, un MOS Controlled Thyristor étant prévu comme composant à semi-conducteur commandé par champ et pouvant être déconnecté.

9. Dispositif suivant la revendication 2, un transistor MOS à effet de champ étant prévu comme composant à semi-conducteur commandé par champ et pouvant être déconnecté, ce transistor étant muni, comme dispositif (V5) à semi-conducteur de puissance pour la commutation de puissance, d'une diode branchée en série.

10. Dispositif suivant la revendication 1, un thyristor pouvant être déconnecté étant prévu comme dispositif (V5) à semi-conducteur de puissance pour la commutation de puissance.
